**Europäisches Patentamt**

**European Patent Office**

**Office européen des brevets**

(19)

(11) Publication number : **0 540 831 A1**

## (12) EUROPEAN PATENT APPLICATION

(21) Application number : **92113436.7**

(22) Date of filing : **06.08.92**

(51) Int. Cl.⁵ : **G06F 13/366**

(30) Priority : **09.08.91 IL 99142**

(43) Date of publication of application :
**12.05.93 Bulletin 93/19**

(84) Designated Contracting States :
**DE FR GB**

(71) Applicant : **Greenspon, Dov**
**Leon Bloom 44/56**
**Haifa 33852 (IL)**

(72) Inventor : **Greenspon, Dov**
**Leon Bloom 44/56**
**Haifa 33852 (IL)**

(74) Representative : **Strehl, Schübel-Hopf,**
**Groening**
**Maximilianstrasse 54 Postfach 22 14 55**
**W-8000 München 22 (DE)**

(54) **Coupling unit for coupling a computer to intelligent and dumb terminals.**

(57)  In a computer network a coupling unit establishes communication between a central computer and various dumb terminals and intelligent workstations, wherein the communication between the central computer and the dumb terminals is effected by a polling signal and the communication between the central computer and the intelligent workstations is effected by a data signal. The coupling unit comprises ports for connecting to each terminal and generating means coupled to each port for generating a polling signal having several active periods, each followed by an inactive period. The coupling unit further includes logic gates coupled to the ports and to the generating means for either passing or blocking the polling signal depending on their status and a logic means coupled to the ports and to the corresponding logic gates for changing the status of the logic gates depending on a data signal appearing at the ports during the active periods.

Fig . 5

## FIELD OF THE INVENTION

This invention relates to coupling unit for coupling dumb and intelligent terminals and workstations to a computer. In particular, it relates to such a coupling unit for coupling an IBM computer to IBM dumb terminals as well as to intelligent terminals and workstations through a Token Ring network.

## BACKGROUND OF THE INVENTION

The IBM system comprises two different classes of computer: the 370/390 large mainframes and their associated peripherals and small and mini mainframes such as Systems 34, 36 and 38 as well as the AS/400 System and their associated peripherals. The manner in which communication between IBM host computers and their peripherals is accomplished will now be explained.

The communication between an IBM host and IBM type A coax terminals and printers is effected via an IBM 3X74 coupling unit which acts as a mediator between the terminals and the host. Every request made by the terminal to the host is addressed first to the 3X74 coupling unit. The 3X74 coupling unit is responsible to pass on the request to the mainframe and the mainframe's response to the terminals. IBM's old 3274 coupling unit, without modifications, required that each terminal be attached to the coupling unit via an individual coaxial cable.

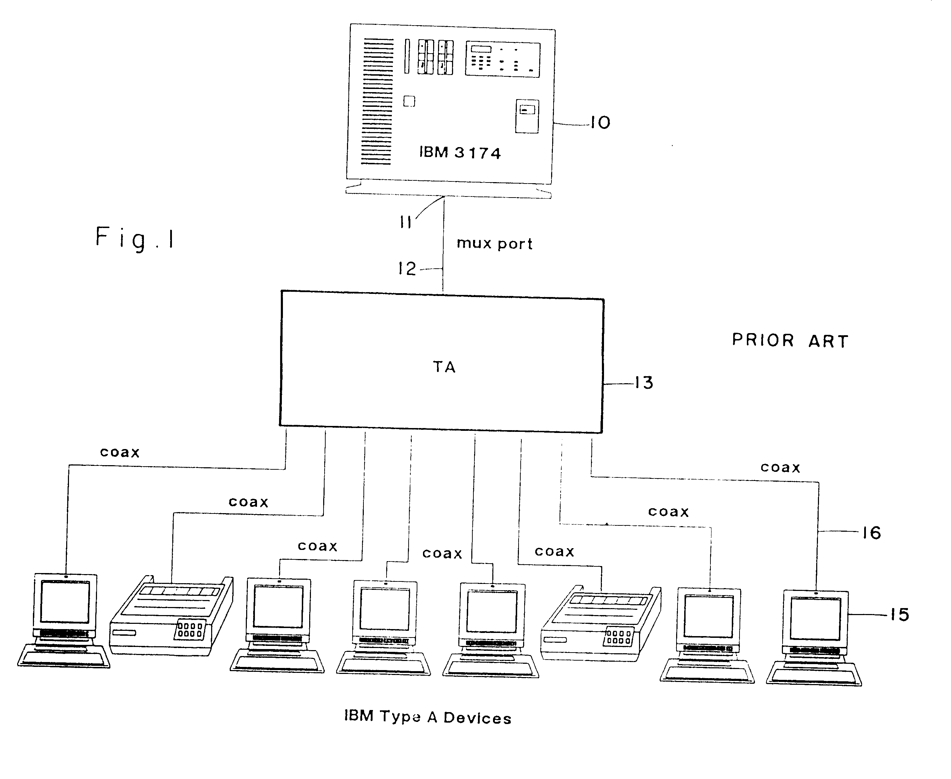

Figs. 1 to 3 show typical systems employing prior art coupling units for coupling dumb and intelligent terminals and workstations to IBM computers. Thus, Fig. 1 shows a preferred solution employing the more modern IBM 3174 coupling unit 10 which saves significantly on the amount of expensive coaxial cable required. The IBM 3174 coupling unit 10 includes four multiplexer ports, one such port 11 being shown in the figure. Each multiplexer port 11 may be connected over a single coaxial cable or fiber optic line 12 through a Terminal Multiplexer Adapter (TMA) 13, which has associated therewith eight individual addresses each relating to a different peripheral device, such as 15, connected thereto via a short length coaxial cable 16.

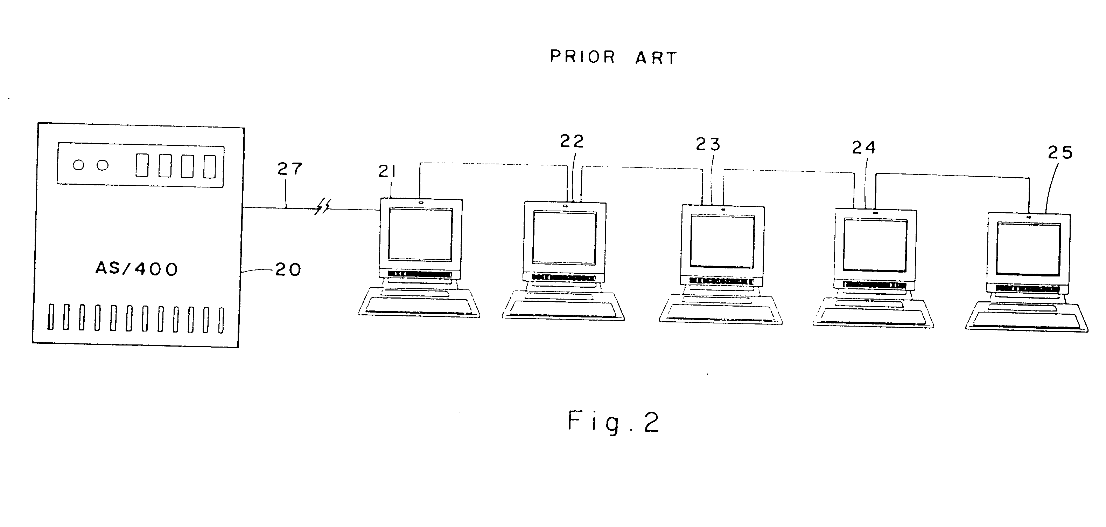

Fig. 2 shows an IBM AS/400 host computer 20 connected via an internal coupling unit to a plurality of IBM Type 52XX twinax terminals and printers 21, 22, 23, 24 and 25 connected peer-to-peer by means of a conventional twinax cable 27. In such a system the internal coupling unit within the host computer 20 acts as a mediator between the terminals 21 to 25 and the host 20. Every request put by a terminal, e.g. 21, to the host 20 is addressed first to the coupling unit. The coupling unit is responsible to pass on the request to the host 20 also the host's response to the terminal 21. The coupling unit accesses each terminal 21 to 25 by a different, unique address: each terminal being responsive to its own address only.

Comparing the systems described above with reference to Figs. 1 and 2, it should be noted that the peripherals shown in Figs. 1 and 2, whilst both being dumb terminals, are different and not interchangeable. Specifically, communication between the IBM 3174 host computer 10 and the Type A terminals 15 employs a different format to that used between the AS/400 host computer 20 and the Type 52XX terminals 21 to 25. Furthermore, the actual physical connectors by means of which the two different types of terminals are connected to their respective host computers, are themselves different. Thus, the Type A terminals 15 shown in Fig. 1 employ a BNC type connector, whilst the Type 52XX terminals 21 to 25 employ a twinax type connector.

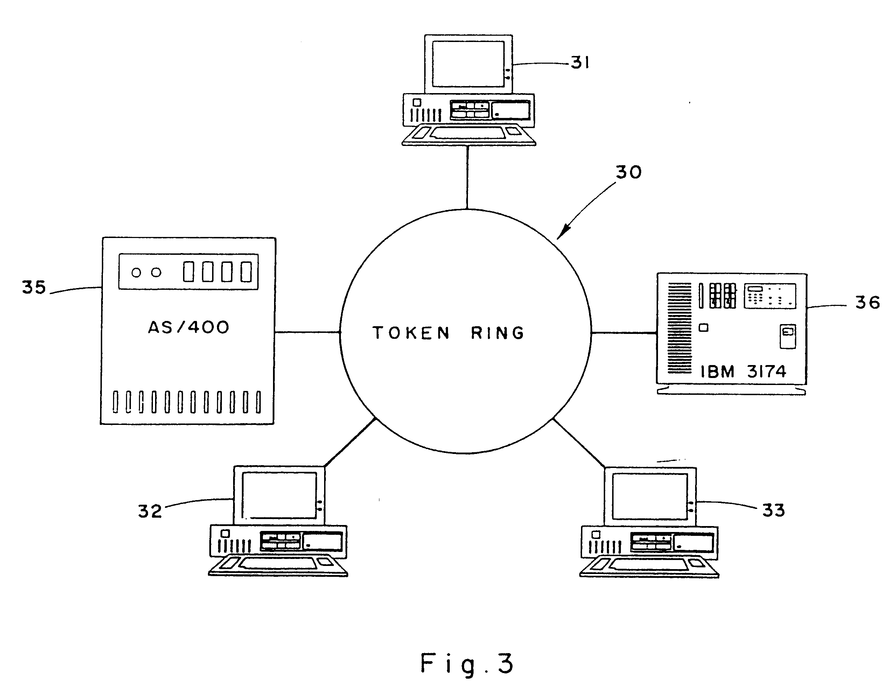

Shown in Fig. 3 is an IBM Token Ring network shown generally as 30, which permits a plurality of so-called intelligent workstations (such as IBM PCs) 31, 32 and 33 to be connected to an IBM host computer 35, such as the AS/400. Also connected to the Token Ring 30 is an IBM 3174 mainframe computer 36, whereby the intelligent workstations 31, 32 and 33 may be connected through the Token Ring 30 to either one of the IBM host computers 35 and 36.

Connection between the intelligent workstations 31, 32 and 33 and the Token Ring 30 is achieved by means of a Token Ring card installed inside each of the intelligent workstations 31, 32 and 33 which employ a special Token Ring communications format which is translated to the correct format either of the IBM AS/400 host computer 35 or to the IBM 3174 host computer 36 and, of course, vice versa, depending on between which host computer and a particular intelligent workstation communication is to be established.

The installation of the Token Ring network 30 involves laying new cables (IBM Type 1 cables), the installation of Token Ring cards within each intelligent workstation, and the loading of the emulation software. Additionally, each Token Ring 30 requires a Multi Station Access Unit (MSAU) (not shown) which permits up to eight intelligent workstations containing a Token Ring card therein to communicate with each other. If one of those terminals is, in fact, an IBM host computer, then the remaining intelligent workstations on the Token Ring network 30 will be able to communicate with the IBM host computer as well as amongst themselves.

As before, Type A and Type 52XX terminals cannot both be connected to the MSAU owing to physical and protocol format incompatibilities. Additionally, not all users require intelligent workstations, since their specific needs may well render said central processing at a host computer quite adequate for their purpose.

It would clearly be desirable to provide a single coupling unit which would permit connection of any type to the above terminals, i.e. Type A, Type 52XX and intelligent workstations through a Token Ring trunk, to one or more host computers.

## SUMMARY OF THE INVENTION

It is an object of the invention to provide a coupling unit in which the drawbacks associated with hitherto proposed coupling units and Multi Station Access Units are significantly reduced or eliminated.

In accordance with the invention, there is provided in a computer network comprising a central computer for connecting thereto dumb terminals and intelligent workstations, communication between the central computer and the dumb terminals being established by means of a polling signal being transmitted to each one of the dumb terminals, and communication between the central computer and the intelligent workstations being established by means of a request signal being transmitted by each one of the intelligent workstations,

a coupling unit for establishing communication between the central computer and a plurality of terminals, the coupling unit comprising:

a plurality of ports for connecting to each one thereof either a dumb terminal or an intelligent workstation,

generating means coupled to each one of the ports for generating a polling signal having a plurality of active periods each followed by an inactive period,

a plurality of logic gates each coupled to a respective one of the ports and to the generating means for either passing or blocking the polling signal depending on a status of the logic gate and having an initial default status wherein the polling signal is passed, and

a logic means coupled to each one of the ports and to a corresponding one of the logic gates and responsive to a data signal appearing at any one of the ports during said active periods for changing the status of the respective logic gate(s).

The solution according to the invention is based on the fact that Type A and Type 52XX dumb terminals establish communication with their host computer in a completely different manner to that employed by intelligent workstations connected via a Token Ring network. Thus, IBM Type A coaxial terminals and IBM Type 52XX twinax terminals, do not initiate any kind of communication with their respective coupling units. All communication between the terminal and the coupling unit is initiated by the coupling unit itself, which acts as a "master", whilst the terminal acts as a "slave" responsive to each command transmitted by the coupling unit. Thus, communication between the dumb Type A and Type 52XX terminals and their coupling units is characterized by a polling signal being transmitted by the coupling unit to each dumb terminal in turn, followed by a silence on the part of the coupling unit, during which the respective dumb terminal responds to the coupling unit. Upon receiving the response, the coupling unit processes the response and responds to the dumb terminal accordingly. In this manner, dialogue is established between the coupling unit and the dumb terminals in half duplex mode: the two never transmitting data simultaneously.

In contrast to this, when an intelligent workstation wishes to establish communication in a Token Ring network, the Token Ring adapter card within the intelligent workstation initiates the communication in the following manner. First, a self test is initiated which tests the receiving and transmitting wires connected between the intelligent workstation and the coupling unit (such as the MSAU described above). The self test comprises an "AC" test wherein the Token Ring adapter card initiates an AC signal on the transmitting wires which is received by the MAU and returned to the Token Ring adapter card, wherein it is compared with the originating signal. If the two signals match, the second phase of the self test is effected wherein the Token Ring adapter card initiates a socalled Phantom Test Current which initiates a small DC current of a few milliampères which provides energy to operate an electromagnetic relay which switches the workstation into the Token Ring. The Phantom Current remains in force for as long as the workstation is connected to the Token Ring, all data transfer being an AC signal superimposed on the DC phantom level.

If, for any reason, a fault develops on the cable connecting the Token Ring adapter card within the workstation to the coupling unit, or if the workstation becomes inactive, the same Phantom Current provides the energy to disconnect the workstation from the Token Ring such that the port to which the workstation was coupled is by-passed.

Once it is established that the terminal connected to a particular port is an intelligent workstation, the polling signal transmitted by the IBM host computer must be immediately disconnected therefrom in order to prevent it interfering with the AC signal transmitted by the Token Ring adapter card and causing the AC test to fail.

The coupling unit according to the invention thus differentiates between a dumb terminal and an intelligent terminal of workstation by establishing whether the terminal in question sends data at the same time that the coupling unit transmits a polling signal to the terminal. Since communication between the coupling unit and a dumb terminal is synchronized such that the two cannot transmit data simultaneously, whilst the AC test initiated by an intelligent terminal or workstation is completely independent of any polling signal transmitted by the coupling unit, as soon as a workstation attempts to establish communication with the coupling unit, the AC signal and the polling signal will interfere with each other. This serves to characterize the terminal in question as an intelligent workstation.

## BRIEF DESCRIPTION OF THE DRAWINGS

In order to understand the invention and to see how the same may be carried out in practice, one preferred embodiment will now be described, by way of non-limiting example only, with respect to the accompanying drawings, in which:

**Fig. 1** is a pictorial representation showing schematically an IBM 3174 coupling unit connected to a plurality of Type A dumb terminals via a Terminal Multiplexer Adapter;

**Fig. 2** shows an IBM AS/400 host computer coupled to a plurality of Type 52XX dumb terminals;

**Fig. 3** shows an IBM 3174 coupling unit, an IBM AS/400 host computer and a plurality of intelligent workstations interconnected by means of a Token Ring network;

**Fig. 4** is a pictorial representation of a system including a plurality of coupling units according to the invention for interconnecting IBM Type A, Type 52XX or intelligent workstations with respective coupling units in any combination;

**Fig. 5** is a schematic diagram showing the principle of operation of a coupling unit according to the invention;

**Fig. 6** is a schematic diagram showing functionally the principal elements of the coupling unit according to the invention;

**Fig. 7** is a functional circuit diagram showing schematically a preferred embodiment according to the invention; and

**Fig. 8** shows a series of timing diagrams useful in explaining the operation of the circuit shown in Fig. 7.

## DETAILED DESCRIPTION OF A PREFERRED EMBODIMENT

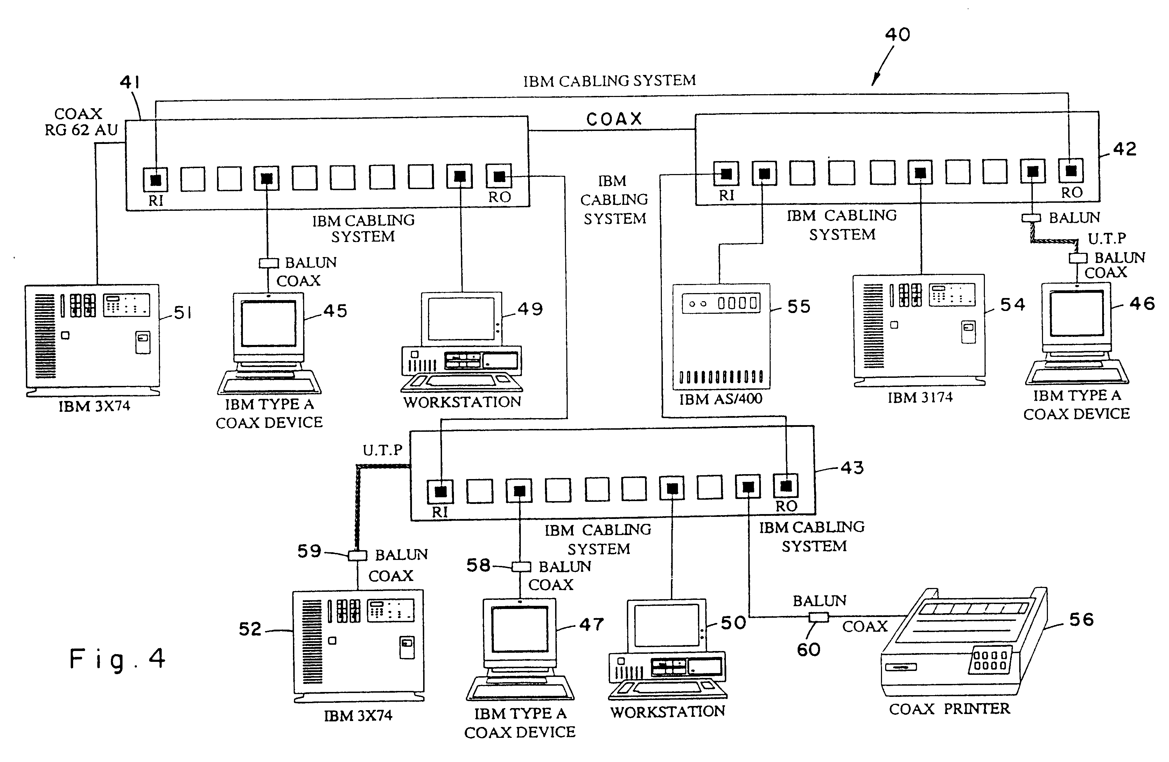

Referring to Fig. 4, there is shown an integrated system 40 comprising three coupling units 41, 42 and 43 according to the invention, connected in cascade and permitting the mutual interconnection of a variety of IBM terminals including, for example, Type A coaxial terminals 45, 46 and 47, each connected to a respective one of the three coupling units 41, 42 and 43, as well as intelligent workstations such as 49 and 50 connected to the coupling units 41 and 43, respectively. IBM 3X74 coupling units 51 and 52 are connected to the coupling units 41 and 43, respectively, whilst an IBM 3174 coupling unit 54 containing a Token Ring interface therein, is connected to the coupling unit 42. Also connected to the coupling unit 42 is an IBM AS/400 host computer 55, whilst a coaxial printer 56, constituting a typical peripheral device, is connected to the coupling unit 43.

Each of the coupling units 41, 42 and 43 has respective input and output sockets, designated RI and RO, respectively, permitting them to be cascaded simply by collecting the output socket RO of one coupling unit to the input socket RI of another coupling unit so as to form a ring network. Connections to the coupling unit 43 are effected by means of unshielded twisted pair (UTP) type cables, whilst the corresponding connections to the IBM Type A coaxial terminal 47, the IBM 3X74 coupling unit 52 and the printer 56 are effected by coaxial cables. In each case, the respective coaxial cable is coupled to the IBM cabling system Type 1 cable by means of a respective balun adapter 58, 59 and 60 which effects the required impedance matching between the cable and the media to which it is connected.

It will be noted that each of the coupling units 41, 42 and 43 has eight ports, permitting eight different peripherals being either a host computer, a 3174 coupling unit or an intelligent workstation to be interconnected such that any number of such terminals in excess of eight may likewise be interconnected merely by connecting a requisite number of coupling units in cascade.

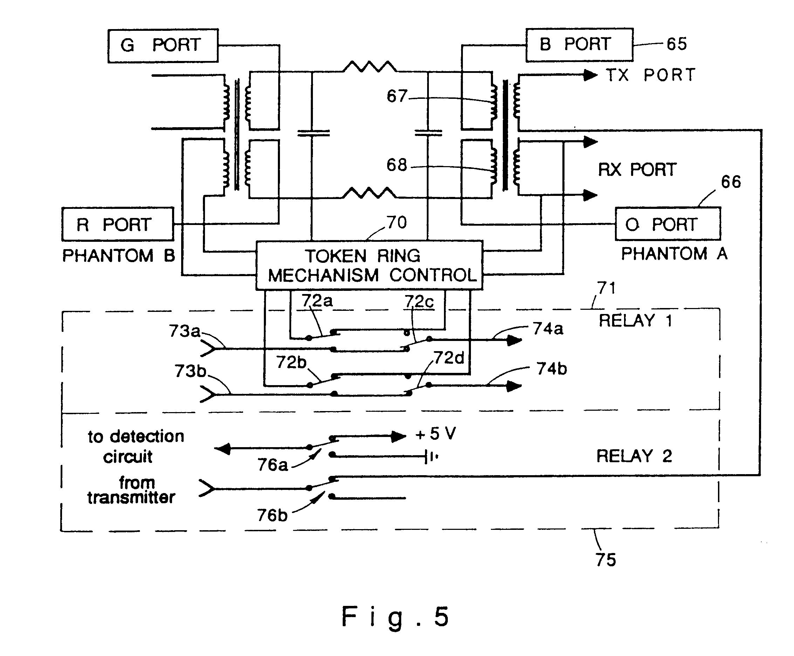

Fig. 5 shows schematically a circuit associated with each of the eight ports in the coupling units 41, 42 and 43 for permitting the connection thereto either of a dumb Type A or Type 3X74 terminal, or of an intelligent workstation including therein a Token Ring adapter card completely flexibly so that any type of terminal can be connected to any port, the discrimination between the different types of terminal being completely transparent to the terminals themselves. This, of course, is in marked contrast to prior art systems such as shown in Fig. 1, wherein disconnecting one of the Type A terminals and substituting therefor an intelligent workstation will not permit the intelligent workstation to function for two reasons. First, during the AC test of the intelligent workstation, the resulting AC signal will interfere with the IBM polling signal and result in total failure of the AC test initiated by the Token Ring adapter card within the intelligent workstation. Secondly, the dumb terminals and the intelligent workstations operate according to different protocols which prohibits substitution of one type of terminal by a different type.

By default, it is assumed that the terminal connected to each port of the coupling unit is dumb, a Type A terminal, for example. A polling signal is transmitted by the coupling unit, e.g. 41, to the **B** and **O** ports 65 and 66, respectively, through transformer coils 67 and 68 and thence to a Token Ring mechanism control shown functionally as 70. The Token Ring mechanism control 70 is a standard piece of equipment which operates in known manner and whose construction and operation will therefore not be described further. Associated with the Token Ring mechanism control 70 is a first relay 71 shown in dotted outline and having associated therewith changeover switches 72a, 72b, 72c and 72d which, in the positions shown in Fig. 5, allow incoming data along input lines 73a and 73b to be routed directly to corresponding output lines 74a and 74b, bypassing the Token Ring mechanism control 70.

However, if the self test procedure initiated by the Token Ring card is in order, then the Token Ring mechanism control 70 reveals that communication is to be initiated between the intelligent workstation containing the Token Ring mechanism control 70 and the corresponding coupling unit, the first relay 71 is energized, which changes the state of the changeover switches 72a, 72b, 72c and 72d, thereby connecting the input lines 73a and 73b, respectively, to their respective output lines 74a and 74b via the Token Ring mechanism control 70.

The above represents the standard function of the Token Ring mechanism control 70. In addition to this, however, means must be provided for ensuring that the polling signal transmitted by the coupling unit is prevented from reaching the port to which the intelligent workstation is connected since, as explained above, if this is not done, the polling signal will interfere with the AC test signal and prevent the intelligent workstation from establishing communication with the coupling unit.

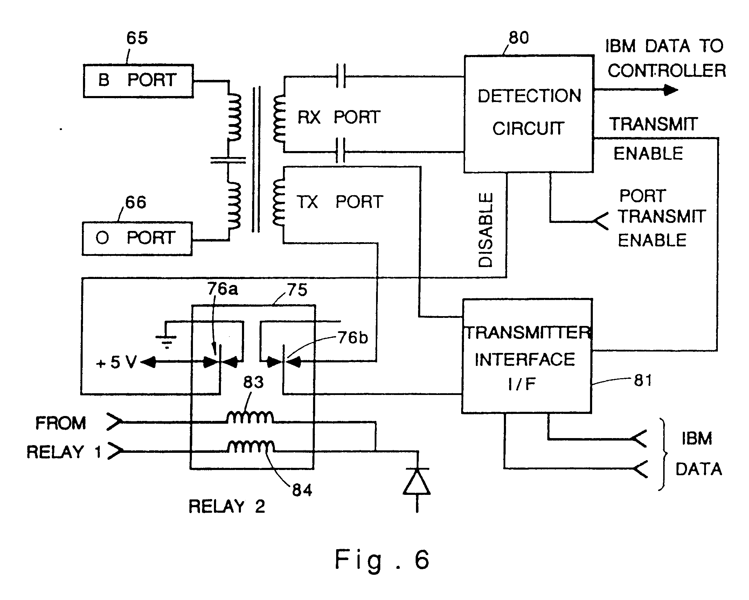

In order to achieve this objective, a second relay 75 is provided having changeover switches 76a and 76b, respectively connecting the positive 5 V supply rail to a detection circuit 80 (Fig. 6) and a transmitter output line Tx to a transmitter interface 81 (also shown in Fig. 6). The connection shown in Fig. 5 again represents the default situation wherein a dumb terminal is connected to the coupling unit port such that data transmitted by the coupling unit (corresponding to the polling signal) is coupled directly to the dumb terminal.

All data transmitted by an IBM dumb terminal or an IBM workstation having a Token Ring adapter card therein, appears as an AC signal across the **B** and **O** ports 65 and 66, respectively and is inductively coupled by transformer coupling to the **Rx** and the **Tx** ports. The AC signal developed across the **Tx** port is of no concern, since the transmitter interface 81 is disabled during receive time, i.e. whilst data is being transmitted by the terminal across the **B** and **O** ports 65 and 66. Consequently, the only path available to the AC signal is via the **Rx** port and from there to the detection circuit 80.

Fig. 6 shows in more detail the novel components of the coupling unit shown in Fig. 5. Thus, there are shown the **B** and **O** ports 65 and 66 coupled via transformer windings to respective **Rx** and **Tx** (receiver and transmitter) ports which, in turn, are connected to the detection circuit 80 and the transmitter interface 81, respectively. The detection circuit 80 establishes whether the terminal connected to the **B** and **O** ports 65 and 66 is a dumb terminal or an intelligent workstation and, in the event that it is a dumb terminal, permits IBM data to pass unimpeded to the coupling unit, whilst also allowing a transmit enable signal to pass through to the transmitter interface 81, thereby permitting IBM data to reach the **Tx** port via the transmitter interface 81 and thus to arrive at the dumb terminal connected to the **B** and **O** ports 65 and 66 via transformer coupling.

However, if the detection circuit 80 establishes that the terminal connected to the **B** and **O** ports 65 and 66, respectively, is an intelligent workstation, then no transmit enable signal is sent to the transmitter interface 81, thereby preventing IBM data from reaching the **Tx** port via the transmitter interface 81. The second relay 75 includes a coil 83 which is connected in series with a corresponding coil 84 in the first relay 71, such that when the first relay 71 is energized upon establishment of communication between the coupling unit and the intelligent workstation, so too is the second relay 75. Consequently, the changeover switches 76a and 76b change state, thereby respectively connecting the disable line of the detection circuit 80 to GND and disconnecting the transmitter interface 81 from the **Tx** port.

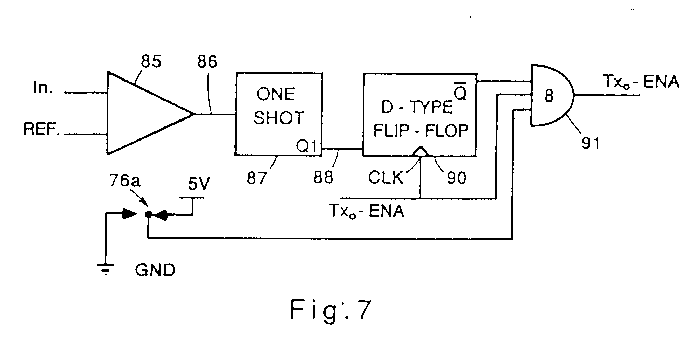

Referring to Fig. 7, there will now be described a preferred circuit for realizing the functional objectives described above with reference to Fig. 6 of the drawings. The IBM polling signal, which is typically a low voltage 50 to 80 mV AC signal, is fed to one input of a differential comparator 85 whose other input is fed with a reference signal, such that an output of the differential comparator 85 is a pulse train having a sufficient voltage magnitude (5 V) for operating TTL logic circuitry. The pulse train appearing at an output 86 of the differential comparator 85 is fed to a retriggerable monostable multivibrator 87 (also known as a retriggerable one shot) which is continuously triggered by each pulse of the pulse train appearing at its input 86, so as to open a window at its output 88 for a time duration of up to $4\mu s$ after the pulse train at its input 86 ceases. The output 88 of the retriggerable one shot 87 is fed to the D input of a D-type Flip Flop 90 having a clock input CLK to which the IBM transmit enable pulse train **Txo-ENA** is fed.

Connected to the inverted output $\overline{\text{Q}}$ is one input of a 3-input AND-gate 91 whose other two inputs are fed, respectively to the **IBM** transmit enable signal and, via the changeover switch 76a of the second relay 75, to the 5 V positive supply rail.

The operation of the circuit is as follows. In the default state, the third input of the AND-gate 91 is tied to the positive supply rail, i.e. logic HIGH. When a polling signal is applied to the input 86 of the retriggerable one shot 87 and an IBM dumb terminal is connected to the coupling unit port, data cannot be transmitted by the dumb terminal at the same time that the polling signal is transmitted by the coupling unit since, as explained above, communication between the coupling unit and the dumb terminal is half duplex. Consequently, when the D-type Flip Flop 90 samples the output 88 of the retriggerable one shot 87 in synchronism with the transmit enable signal applied to its clock input CLK, the output 88 of the retriggerable one shot will be logic LOW and consequently, the $\overline{Q}$ output of the D-type Flip Flop will be logic HIGH. Thus, all three inputs to the 3-input AND-gate 91 will be logic HIGH and the 3-input AND-gate 91 will pass the transmit enable signal sent by the coupling unit port to the dumb terminal.

On the other hand, if an intelligent workstation containing a Token Ring adapter card is connected to the coupling unit port, then the data sent by the Token Ring adapter card to the coupling unit port may arrive at the same time as the polling signal is transmitted by the coupling unit to the port coupled to the intelligent workstation. In this case, when the D-type Flip Flop 90 samples the output 88 of the retriggerable one shot 87 in synchronism with the transmit enable signal applied to its clock input CLK, the output 88 of the retriggerable one shot 87 will be logic HIGH and, consequently, the $\overline{Q}$ output of the D-type Flip Flop 90 will go to logic LOW. Thus, one of the inputs connected to the 3-input AND-gate 91 is logic LOW and, in this configuration, the AND-gate 91 is disabled, thereby preventing the transmit enable signal from passing therethrough and interfering with the polling signal.

As soon as this happens, the changeover switch 76a changes state such that the contact connected to the 3-input AND-gate 91 is connected to GND, i.e. logic LOW, this situation being maintained for as long as the Token Ring adapter card within the intelligent workstation establishes communication with the coupling unit port. Under this condition, since one of the inputs to the 3-input AND-gate 91 is permanently logic LOW, the 3-input AND-gate 91 is permanently disabled for as long as the Token Ring adapter card establishes communication between the intelligent workstation and the coupling unit. Only when such communication ceases, does the changeover switch 76a change state such that the 5 V positive supply rail is again connected to the 3-input AND-gate 91, thereby reinstating the default situation which assumes that the coupling unit port is connected to an IBM dumb terminal.

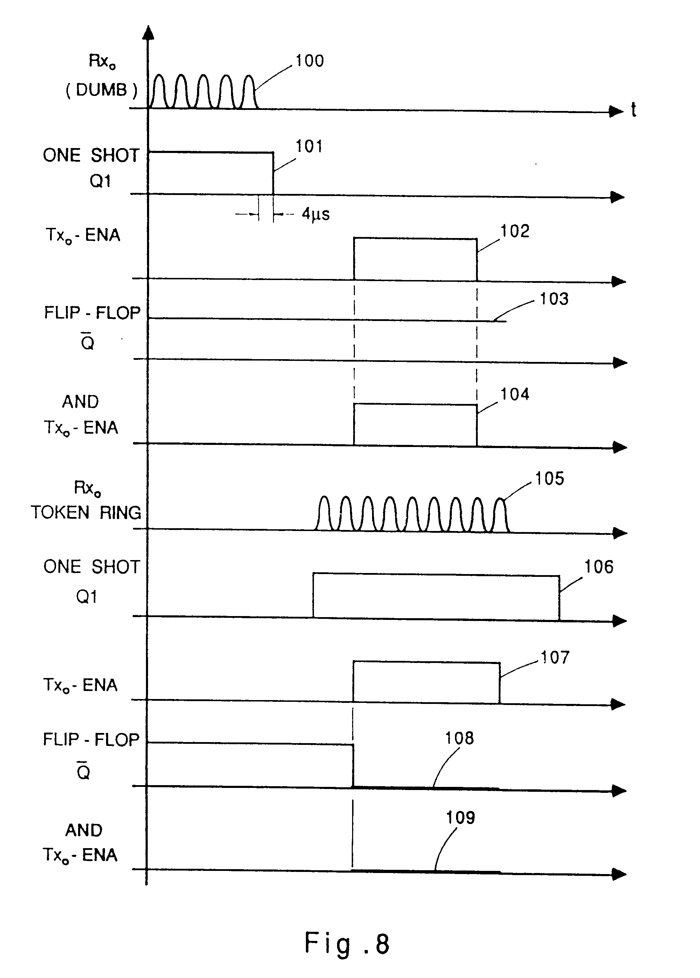

Referring to Fig. 8, there is shown a series of timing diagrams relating to the operation of the circuit shown in Fig. 7. The waveform 100 represents a signal **Rxo** transmitted by a dumb terminal and appearing at the output 86 of the differential comparator 85 and the input of the retriggerable one shot 87. The waveform 101 shows the window opened by the retriggerable one shot 87 appearing at its output 88 and lasting for a duration of up to 4 μs after the waveform 100 falls to zero.

The waveform 102 shows the transmit enable **Txo-ENA** signal applied to the clock input CLK of the D-type Flip Flop 90. Since for a dumb terminal, the transmit enable signal can never appear at the same time as the receive signal **Rxo**, waveform 103 shows that the inverted output $\overline{Q}$ of the D-type Flip Flop 90 is always high. The waveform 104 shows the output of the AND-gate 91 which is logic **HIGH** when the coupling unit is transmitting a polling signal and a dumb terminal is connected to its output port.

The waveform 105 shows an AC Test signal **Rxo** transmitted by a Token Ring adapter card in an intelligent workstation, waveform 106 being the window opened by the retriggerable one shot 87 and appearing at its output 88. In this case, when the coupling unit sends a transmit enable **Txo-ENA** pulse as shown in waveform 107 to a clock input CLK of the D-type Flip Flop 90, the inverted output $\overline{Q}$ of the Flip Flop 90 goes logic LOW as shown by the waveform 108. The waveform 109 shows that under these circumstances, the transmit enable **Txo-ENA** output from the AND-gate 91 also goes to logic LOW, thereby preventing the polling signal from reaching the Token Ring card and interfering with the AC Test signal 105.

The invention thus provides a coupling unit which permits communication between either a dumb terminal or an intelligent workstation to be effected automatically, resulting in greater flexibility and interchangeability of hardware.

Although in the preferred embodiment a retriggerable monostable multivibrator is employed within the control logic, it will be appreciated that its function can equally well be achieved by means of any suitable digital logic whose output is fed to the D-type Flip Flop 90 and causes the $\overline{Q}$ output thereof to go from **HIGH** to LOW whenever data is transmitted by the Token Ring adapter card in an intelligent terminal. Thus, for example, an additional D-type Flip Flop in conjunction with a simple logic OR gate can be employed instead of the retriggerable monostable multivibrator, thereby obviating the need for external timing components and rendering the operation of the circuit both more consistent and predictable.

## Claims

1. In a computer network comprising a central computer for connecting thereto dumb terminals and intelligent workstations, communication between the central computer and the dumb terminals being established by means of a polling signal being transmitted to each one of the dumb terminals, and communication between the central computer and the intelligent workstations being established by means of a data signal being transmitted by each one of the intelligent workstations,

    a coupling unit for establishing communication between the central computer and a plurality of terminals, the coupling unit comprising:

a plurality of ports for connecting to each one thereof either a dumb terminal or an intelligent workstation,

generating means coupled to each one of the ports for generating a polling signal having a plurality of active periods each followed by an inactive period,

a plurality of logic gates each coupled to a respective on of the ports and to the generating means for either passing or blocking the polling signal depending on a status of the logic gate and having an initial default status wherein the polling signal is passed, and

a logic means coupled to each one of the ports and to a corresponding one of the logic gates and responsive to a data signal appearing at any one of the ports during said active periods for changing the status of the respective logic gate(s).

2. The coupling unit according to Claim 1, wherein the dumb terminals are IBM terminals and the intelligent workstations are connected to the coupling unit through a Token Ring.

3. The coupling unit according to Claim 1 or 2, wherein each logic means includes amplification means for amplifying the data signal.

4. The coupling unit according to Claim 3, wherein the amplification means includes a differential comparator for comparing the data signal with a predetermined threshold and producing an amplified d.c. level whose polarity is positive or negative according to whether the data signal is greater than or less than the predetermined threshold.

5. The coupling unit according to Claim 4, wherein each logic means includes:

a retriggerable monostable multivibrator responsive to the data signal for producing a first logic signal having a first polarity and having an opposite polarity in the absence of the data signal, and

wave shaping means coupled to the generating means for producing a second logic signal having said first polarity during the active periods and having an opposite polarity during the inactive periods;

the logic gate being coupled to the retriggerable monostable multivibrator and to the wave shaping means and being responsive to the first logic signal for passing the second logic signal to an output thereof during said active periods if the first logic signal is of said opposite polarity.

6. The coupling unit according to Claim 5, wherein each logic means further includes:

a sampling means coupled to an output of the retriggerable monostable multivibrator and to the wave shaping means for sampling said output during the active periods and producing at an output of the sampling means an inverted signal having an opposite polarity to that of the sampled output;

the logic gate being coupled to the sampling means and to the wave shaping means and being responsive to the inverted signal having said first polarity for passing the second logic signal to its output.

7. The coupling unit according to Claim 6, further including a latching means coupled to the logic gate and responsive to the inverted signal having said opposite polarity for maintaining the status of the logic gate such that the polling signal is permanently blocked thereby.

8. The coupling unit according to Claim 6 or 7, wherein the logic gate is an AND-gate.

9. The coupling unit according to Claim 7, wherein the logic gate and the latching means are at least partially constituted by a 3-input AND-gate.

10. The coupling unit according to Claim 9, wherein the latching means is partially constituted by an input to the 3-input AND-gate initially set to logic "1" and which changes to logic "0" when the inverted signal changes from logic "1" to logic "0".

11. The coupling unit according to Claim 6 or 7, using inverse logic wherein the logic gate is a NOR-gate.

12. A coupling unit substantially as described herein with reference to the accompanying drawings.

Fig. 1

IBM 3174

PRIOR ART

mux port

TA

coax coax coax coax coax coax coax coax

IBM Type A Devices

10

11

12

13

16

15

EP 0 540 831 A1

8

PRIOR ART

Fig. 2

Fig.3

EP 0 540 831 A1

Fig. 4

Fig. 5

Fig. 6

EP 0 540 831 A1

In.

REF.

85

86

ONE
SHOT

87

Q1

88

D - TYPE
FLIP - FLOP

$\overline{Q}$

CLK

90

8

91

Tx$_o$ - ENA

Tx$_o$ - ENA

76a

5V

GND

Fig. 7

Fig.8

**European Patent Office**

# EUROPEAN SEARCH REPORT

Application Number

EP    92 11 3436

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 896 266 (KLASHKA ET AL.)<br>* column 2, line 39 - line 68 *<br>* column 5, line 26 - line 66 *<br>* claims 1,3; figure 2 *<br>--- | 1,12 | G06F13/366 |
| A | EP-A-0 286 235 (TANDEM COMPUTERS INC.)<br>* column 1, line 46 - column 2, line 51 *<br>--- | 1,12 | |
| A | EP-A-0 200 365 (TEXAS INSTRUMENTS INC.)<br>* column 2, line 6 - column 4, line 41 *<br>----- | 1,12 | |
| | | | **TECHNICAL FIELDS SEARCHED (Int. Cl.5)**<br><br>G06F |

The present search report has been drawn up for all claims

| Place of search | Date of completion of the search | Examiner |
|---|---|---|
| THE HAGUE | 27 NOVEMBER 1992 | MCDONAGH F.M. |

EPO FORM 1503 03.82 (P0401)